# EUROPÄISCHE PATENTSCHRIFT

(11) **EP 4 240 983 B1**
(45) Veröffentlichungstag und Bekanntmachung des Hinweises auf die Patenterteilung: **06.08.2025**
(21) Anmeldenummer: 21798021.8
(22) Anmeldetag: 20.10.2021
(51) Int. Cl.: F16D 1/10, H02K 7/00

(54) **KUPPLUNGSANORDNUNG MIT EINER FEDER-NUT STECKVERBINDUNG UND GETRIEBEMOTOR MIT DER KUPPLUNGSANORDNUNG**
COUPLING ARRANGEMENT WITH TENON AND GROOVE CONNECTION AND GEAR MOTOR WITH THE COUPLING ARRANGEMENT
DISPOSITIF D'ACCOUPLEMENT AVEC ASSEMBLAGE À MORTAISE ET TENON ET MOTORÉDUCTEUR AVEC LE DISPOSITIF D'ACCOUPLEMENT

(30) Priorität: 06.11.2020 DE 102020006832
(43) Veröffentlichungstag der Anmeldung: 13.09.2023
(73) Patentinhaber: SEW-EURODRIVE GmbH & Co. KG, 76646 Bruchsal (DE)
(72) Erfinder: TEGELTIJA, Miki, 76689 Karlsdorf-Neuthardt (DE)
(86) Internationale Anmeldenummer: PCT/EP2021/079127
(87) Internationale Veröffentlichungsnummer: WO 2022/096272

(56) Entgegenhaltungen:
- DE-A1- 19 623 287
- DE-U1- 8 437 102
- GB-A- 2 347 480
- JP-A- 2004 068 846
- JP-A- S6 334 321
- US-A1- 2011 250 976
- US-A1- 2015 080 136
- US-A1- 2019 309 798

## Beschreibung

Die Erfindung betrifft eine Kupplungsanordnung, insbesondere eines Getriebemotors, und einen Getriebemotor mit Kupplungsanordnung.

**Aus der** GB 2 347 480 A1 **ist ein Getriebemotor bekannt.**

**Aus der** DE 697 16 155 T2 **ist eine Struktur zur Befestigung eines Laufrads auf einer drehbaren Welle bekannt.**

**Aus der** JP S63 34 321 A1 **ist als nächstliegender Stand der Technik eine Kupplungsanordnung bekannt.**

**Aus der** DE 196 23 287 A1 **ist ebenfalls eine Kupplungsanordnung bekannt.**

**Aus der** US 2015 080 136 A1 **ist eine Kupplung für eine rotierende Schneidevorrichtung bekannt.**

**Aus der** US 2019 309 798 A1 **ist eine Kupplungsstruktur für einen hydraulischen Antrieb bekannt.**

**Aus der** GB 2 347 480 A **ist eine Getriebemotoranordnung bekannt.**

**Aus der** DE 84 37 102 U1 **ist ein bei einer Brenkraftmaschine zwischen der Nockenwelle und der Zündverteilerwelle angeordneter Kupplungskörper bekannt.**

**Aus der** US 2011/0250976 A1 **ist eine Rotationskupplung bekannt.**

Der Erfindung liegt daher die Aufgabe zugrunde, eine Kupplungsanordnung, insbesondere eines Getriebemotors, und einen Getriebemotor mit Kupplungsanordnung, weiterzubilden, wobei die Umweltbelastung verringert sein soll.

Erfindungsgemäß wird die Aufgabe bei der Kupplungsanordnung nach den in Anspruch 1 und bei dem Getriebemotor nach den in Anspruch 13 angegebenen Merkmalen gelöst.

Wichtige Merkmale der Erfindung bei der Kupplungsanordnung, insbesondere eines Getriebemotors, sind, dass die Kupplungsanordnung eine Welle, an welcher eine Feder ausgeformt ist, aufweist sowie eine Hülse, an welcher eine Nut ausgeformt ist, in welche die Feder zumindest teilweise hineinragt, wobei die Welle und die Hülse um eine Drehachse drehbar angeordnet sind, wobei die Hülse koaxial zur Welle angeordnet ist, wobei die Nut und die Feder sich jeweils in radialer Richtung erstrecken, wobei die Feder zumindest teilweise mit einer Beschichtung versehen ist, wobei die radiale Richtung auf die Drehachse der Welle bezogen ist.

Von Vorteil ist dabei, dass die Beschichtung ein direktes Aufschlagen metallischer Bereiche verhinderbar macht. Dadurch ist die Abrasion metallischer Partikel verhindert und somit der Umweltschutz verbessert, da weniger Partikel in die Umwelt gelangen. Außerdem ist die Standzeit der Kupplungsanordnung durch die Beschichtung verlängert und auch dadurch ein geringerer Ersatzbedarf erreichbar. Auch deshalb sind weniger Ressourcen für Ersatzbedarf notwendig und daher der Energieverbrauch zum Herstellen des Ersatzbedarfs verringert verringert und der Umweltschutz somit verbessert beziehungsweise der Umweltbelastung verringert.

Bei einer vorteilhaften Ausgestaltung sind die Welle mit der Hülse drehfest verbunden, insbesondere wobei die Welle mittels der Feder mit der Hülse mittels der Nut in Umfangsrichtung formschlüssig verbunden sind. Von Vorteil ist dabei, dass das Drehmoment durch die formschlüssige Verbindung geleitet wird und ein Überlasten der Kupplungsanordnung erst bei extrem hohem Drehmoment eintritt, insbesondere wobei die Feder abbricht oder die Hülse zerstört wird. Da aber die Beschichtung Drehmomentspitzen, also Drehmomentstöße, insbesondere Drehmomentrucke, abdämpft, ist die Kupplungsanordnung gegen Überlastung noch weiter gesichert.

Bei einer vorteilhaften Ausgestaltung ist die Feder an der der Hülse zugewandten Stirnseite der Welle angeordnet,
wobei die Nut an der der Welle zugewandten Stirnseite der Hülse angeordnet ist. Von Vorteil ist dabei, dass eine einfache Herstellung ermöglicht ist, insbesondere durch Fräsen und/oder Drehen. Außerdem ist eine leistungsfähige effiziente Drehmomentübertragung erreichbar.

Bei einer vorteilhaften Ausgestaltung ist die Beschichtung ein Gummi, insbesondere eine durch Eintauchen der Feder in Flüssiggummi aufgebrachte Beschichtung ist. Von Vorteil ist dabei, dass die Herstellung durch bloßes Eintauchen in eine Flüssigkeit ausführbar ist.

Bei einer vorteilhaften Ausgestaltung ist die Beschichtung ein Silikon oder ein Silikon-haltiges Material. Von Vorteil ist dabei, dass ein einfaches Aufbringen der Beschichtung erreichbar ist.

Bei einer vorteilhaften Ausgestaltung ist die Beschichtung ein Kunststoff. Von Vorteil ist dabei, dass ein elastischer Kunststoff einfach und mit geringem Aufwand aufbringbar ist.

**Erfindungsgemäß** ist an der Welle eine ebene axiale Stirnfläche ausgebildet, an welcher die Feder angrenzt,
wobei die Normalenrichtung der axialen Stirnfläche parallel zur Drehachse der Welle ausgerichtet ist,
wobei die axiale Stirnfläche, insbesondere ebenfalls, mit der Beschichtung versehen ist. Von Vorteil ist dabei, dass die Beschichtung nicht nur in Umfangsrichtung, sondern auch in axialer Richtung wirksam ist, also axial gerichtetes Anschlagen oder axial gerichtete Stöße verhindert und/oder abdämpft.

Bei einer vorteilhaften Ausgestaltung berührt die Hülse die axiale Stirnfläche, insbesondere also die Beschichtung, welche die axiale Stirnfläche aufweist. Von Vorteil ist dabei, dass axial gerichtetes Anschlagen oder axial gerichtete Stöße verhindert und/oder abdämpft werden.

Bei einer vorteilhaften Ausgestaltung ist die Hülse in einer Bohrung einer Rotorwelle aufgenommen und/oder ist drehfest mit der Rotorwelle verbunden. Von Vorteil ist dabei, dass eine einfache belastbare Verbindungstechnik anwendbar ist.

**Erfindungsgemäß** ist eine axial gerichtete Bohrung in die Feder eingebracht, die koaxial zur Welle und/oder zur Drehachse der Welle ausgerichtet ist. Von Vorteil ist dabei, dass das Luftvolumen der durch die Hülse durchgehenden Bohrung erhöht ist und somit eine Verbesserung des Frequenzverhaltens der Dämpfung axialer Schwingungsmoden erreichbar ist.

Bei einer vorteilhaften Ausgestaltung ist die Hülse aus Stahl gefertigt und/oder die Welle ist aus Stahl gefertigt. Von Vorteil ist dabei, dass ein hohes Drehmoment übertragbar ist.

Bei einer vorteilhaften Ausgestaltung weist die Welle eine Verzahnung auf. Von Vorteil ist dabei, dass die Welle als eintreibende Welle des Getriebes verwendbar ist, welche über die Hülse von einer Rotorwelle eines Elektromotors eines Getriebemotors antreibbar ist.

Bei einer vorteilhaften Ausgestaltung ist axial zwischen der Verzahnung und der Feder an der Welle ein Lagersitz ausgebildet. Von Vorteil ist dabei, dass die Welle nahe zum Kupplungsbereich, also nahe zur Hülse hin, drehbar gelagert und somit auch gestützt ist.

Bei einer vorteilhaften Ausgestaltung weist die Hülse eine durch die Hülse durchgehende Axialbohrung auf. Von Vorteil ist dabei, dass zusammen mit dem von der axial gerichteten Bohrung der Feder, insbesondere der Welle, ein möglichst großes Luftvolumen umschlossen wird, so dass eine Verbesserung des Frequenzverhaltens der Dämpfung axialer Schwingungsmoden erreichbar ist.

Bei einer vorteilhaften Ausgestaltung liegen die Nutwände der Nut an den beschichteten Seitenwänden der Feder an. Von Vorteil ist dabei, dass Drehmomentstöße abdämpfbar sind, also in Umfangsrichtung eine dämpfende Wirkung erreichbar ist, welche eine Verringerung der Umweltbelastung bewirkt.

Bei einer vorteilhaften Ausgestaltung ist die durch die Hülse axial durchgehende Axialbohrung zur axial gerichteten Bohrung der Feder, insbesondere der Welle, koaxial ausgerichtet. Von Vorteil ist dabei, dass ein gemeinsam umschlossenes möglichst großes Luftvolumen bewirkbar ist und somit eine Verbesserung des Frequenzverhaltens der Dämpfung axialer Schwingungsmoden erreichbar ist.

Bei einer vorteilhaften Ausgestaltung mündet die durch die Hülse axial durchgehende Axialbohrung in die axial gerichtete Bohrung der Feder, insbesondere der Welle. Von Vorteil ist dabei, dass ein gemeinsam umschlossenes möglichst großes Luftvolumen bewirkbar ist und somit eine Verbesserung des Frequenzverhaltens der Dämpfung axialer Schwingungsmoden erreichbar ist.

Wichtige Merkmale bei dem Getriebemotor mit einer vorgenannten Kupplungsanordnung sind, dass der Getriebemotor einen Elektromotor aufweist,
wobei der Elektromotor eine drehbar gelagerte Rotorwelle aufweist,
wobei die Hülse in eine in die Rotorwelle eingebrachte, axial gerichtete Bohrung der Rotorwelle eingesteckt ist.

Von Vorteil ist dabei, dass eine einfache Herstellung des Getriebemotors ausführbar ist, wobei die Beschichtung im Bereich der Drehmomentübertragung der Kupplungsanordnung sowie im Bereich der axial gerichteten Berührung der Kupplungsteile, insbesondere also Welle und Hülse, der Kupplungsanordnung ein direktes Aufschlagen metallischer Bereiche verhinderbar macht. Dadurch ist die Abrasion metallischer Partikel verhindert und somit der Umweltschutz verbessert, da weniger Partikel in die Umwelt gelangen. Außerdem ist die Standzeit der Kupplungsanordnung durch die Beschichtung verlängert und auch dadurch ein geringerer Ersatzbedarf erreichbar. Auch deshalb sind weniger Ressourcen für Ersatzbedarf notwendig und daher der Energieverbrauch zum Herstellen des Ersatzbedarfs verringert verringert und der Umweltschutz somit verbessert beziehungsweise der Umweltbelastung verringert.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

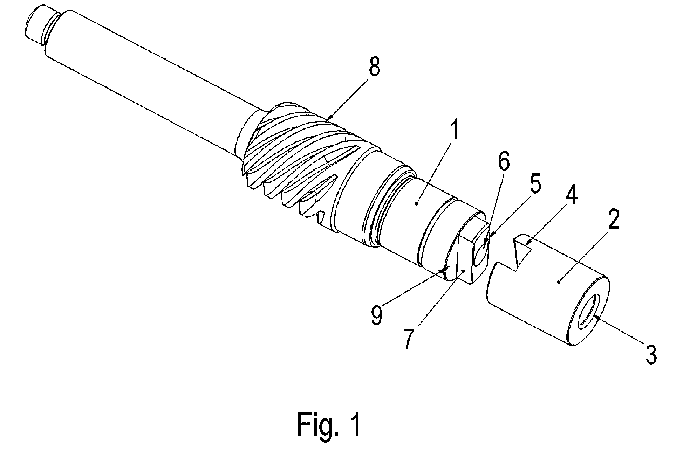

In der Figur 1 ist eine erfindungsgemäße Kupplungsanordnung eines Getriebemotors in Schrägansicht dargestellt, wobei die Kupplungsanordnung eine Welle 1 und eine Hülse 2 aufweist.

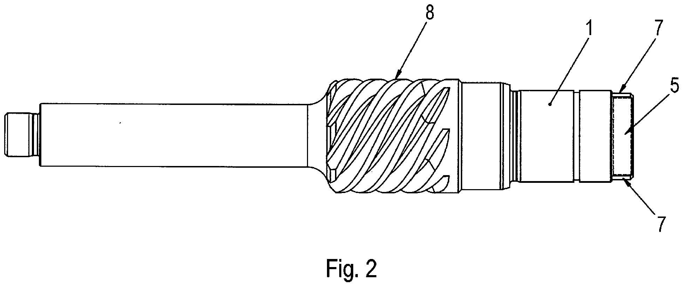

In der Figur 2 ist ein Längsschnitt durch die Welle 1 dargestellt.

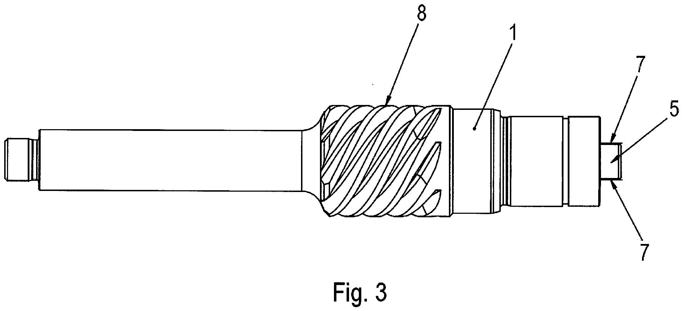

In der Figur 3 ist ein weiterer Längsschnitt durch die Welle 1 dargestellt, wobei die Schnittebene senkrecht zu der in Figur 2 gewählten Schnittebene ausgerichtet ist.

Wie in den Figuren gezeigt, weist die Welle 1 an ihrem der Hülse zugewandten axialen Endbereich einen Bereich einer Feder 5 auf, die in eine Nut 4 der Hülse 2 hineinragt.

Die Nut 4 ist radial gerichtet und vorzugsweise durchgehend, insbesondere also offen zur Umgebung hin.

Die Feder 5 ist ebenfalls in radialer Richtung ausgerichtet.

Somit ist eine Drehmomentdurchleitung in Umfangsrichtung formschlüssig ermöglicht.

Die Welle 1 ist mit einer Verzahnung versehen. Alternativ ist ein Verzahnungsteil drehfest mit der Welle 1 verbunden.

Die Verzahnung steht mit einer Verzahnung eines Verzahnungsteils im Eingriff, welches drehfest mit einer Zwischenwelle verbunden ist. Die Zwischenwelle sowie die Welle 1 sind jeweils drehbar gelagert im Gehäuse des Getriebes. Die Welle 1 ist formschlüssig mit der Hülse 2 verbunden, so dass Drehmoment von der Hülse 2 an die Welle 1 durchleitbar ist.

Die Hülse 2 ist mit der Rotorwelle eines Elektromotors des Getriebemotors drehfest verbunden. Vorzugsweise ist die Hülse 2 in die Rotorwelle eingesteckt, insbesondere formschlüssig und/oder kraftschlüssig mit der Rotorwelle verbunden. Alternativ ist aber auch eine kraftschlüssige Verbindung verwendbar, die vorzugsweise mittels Klebstoff zusätzlich stoffschlüssig ausgeführt wird.

Die der Hülse 2 zugewandte axiale Stirnfläche 9 der Welle 1 ist von der Feder 5 nicht vollständig bedeckt, da die Feder 5 eine im Wesentlichen quaderförmige Gestaltung aufweist. Der Querschnitt der Welle 1 im Bereich der Stirnfläche 9 hingegen ist kreisförmig. Somit ist beidseitig der Feder 5 ein ebener Flächenbereich als axiale Stirnfläche 9 ausgebildet.

Die Feder 5 erhebt sich sozusagen domartig aus der axialen Stirnfläche 9 in axialer Richtung zur Hülse 2 hin hervor.

Die Normalenrichtung der axialen Stirnfläche 9 ist axial gerichtet, also parallel zur Drehachse der Welle 1.

Die Feder 5 weist beidseitig ebenfalls jeweils einen ebenen Flächenbereich 7 auf, der jeweils senkrecht zur axialen Stirnfläche 9 ausgerichtet ist. Die Normalenrichtung der ebenen Flächenbereiche 7 ist parallel zu einer radialen Richtung gerichtet.

Zwei der ebenen Flächenbereiche 7 sind voneinander beabstandet und zueinander parallel ausgerichtet.

Eine zentrische Bohrung 6 ist in die Welle 1 eingebracht. Die Bohrung 6 ist also koaxial zur Drehachse der Welle 1 ausgerichtet.

Bei der Herstellung der Welle 1 wird diese in Flüssiggummi eingetaucht und somit teilweise beschichtet. Insbesondere wird die Feder 5 eingetaucht und auf diese Weise die beiden ebenen Flächenbereiche 7 beschichtet. Außerdem wird auch die axiale Stirnfläche 9 beschichtet, so dass bei axial gerichtetem Anschlagen der Hülse 2 an die axiale Stirnfläche 9 eine Dämpfung des Aufschlags bewirkt wird.

Anstatt Flüssiggummi ist auch ein Silikon oder ein Kunststoff verwendbar.

Da die Hülse 2 nicht beschichtet ist, ist ein passgenaues Verbinden mit der Rotorwelle des Elektromotors ermöglicht. Dabei wird die Hülse 2 in eine Bohrung der Rotorwelle gesteckt, deren lichter Innendurchmesser dem Außendurchmesser der Hülse 2 gleicht, wobei Toleranzen für ein passgenaues Verbinden entsprechend gewählt sind. Auf diese Weise ist ein belastbarer Kraftschluss zwischen Hülse 2 und Rotorwelle bewirkbar.

Die Bohrung der Rotorwelle ist vorzugsweise als zentrische, also zur Drehachse der Rotorwelle koaxial ausgerichtete, Sacklochbohrung ausgeführt. Die Hülse 2 weist eine axial durchgehende Bohrung, also Axialbohrung 3, auf. Somit ist beim Einstecken der Hülse 2 in die Sacklochbohrung der Rotorwelle ein Entweichen von Luft aus dem Bohrloch ermöglicht und dadurch die Verbindung der Hülse 2 mit der Rotorwelle in hoher Genauigkeit ermöglicht.

Mittels des auf den ebenen Flächenbereichen 7 aufgebrachten Beschichtungen ist bei Schwankungen des vom Elektromotor über die Rotorwelle und Hülse 2 gelieferten Drehmoments ein Verringern von den Schwankungen entsprechenden Klappergeräuschen erreichbar.

Die zentrische Bohrung 6 verringert das Trägheitsmoment der Welle 1. Außerdem verringert die zentrische Bohrung 6 die Amplitude von Schwankungen des Luftdrucks in dem von der Axialbohrung 3 umgebenen Raumbereich. Denn bei zwischen Welle 1 und Hülse 2 relativer axialer Bewegung schwankt der Luftdruck des Raumbereichs der Schwankung des Volumens entsprechend. Durch das lichte Innenvolumen der zentrischen Bohrung 6 wird das Volumen des Raumbereichs vergrößert, so dass die Schwankung des Volumens bezogen auf das gesamte Volumen verringert wird.

Darüber hinaus ermöglicht das durch die zentrische Bohrung 6 vergrößerte Luftvolumen der Axialbohrung 3 auch eine verbesserte Dämpfung von hochfrequenten axialen Schwingungen. Denn wenn die beschichtete axiale Stirnfläche 9 direkt an der Hülse 2 anliegt und eine axial gerichtete, eine Frequenz aufweisende Schwingungsmode auftritt, schwingt das Luftvolumen zwar ebenfalls mit dieser Frequenz; allerdings weist die Dissipation von Energie in der Beschichtung eine unterschiedliche Frequenzabhängigkeit auf im Vergleich zum Luftvolumen.

Die dissipierte Leistung, also die Umwandlung von Energie der Schwingungsmode in Wärmeleistung, ist bei sehr hohen Frequenzen vorwiegend durch das Luftvolumen bewerkstelligt, weil die Beschichtung bei solch hohen Frequenzen nicht mehr folgen kann. Bei niedrigen Frequenzen hingegen wird vorwiegend durch die Beschichtung - ähnlich zum Walken bei Reifen - Energie dissipiert.

Erfindungsgemäß ist also eine Vergleichmäßigung des frequenzabhängigen Dissipationsverhaltens erreichbar.

Axial zwischen der Verzahnung der Welle 1 und der Feder 5 ist ein Lagersitz zur Aufnahme eines Innenrings eines Lagers ausgeführt. Dieser Lagersitz ist feinbearbeitet.

Bei weiteren erfindungsgemäßen Ausführungsbeispielen ist die Hülse 2 alternativ oder zusätzlich ebenfalls in Flüssiggummi eintauchbar und somit beschichtbar. Insbesondere ist hierbei ein Beschichten der Nut wichtig. Allerdings ist durch das Beschichten der Hülse 2 eine verminderte Präzision beim Einstecken in die Rotorwelle erreichbar.

### Bezugszeichenliste

1 Welle
2 Hülse
3 Axialbohrung, durchgehend
4 Nut
5 Feder
6 Bohrung, zentrisch
7 Schicht, insbesondere als Flüssiggummi aufgebracht
8 Verzahnung
9 Stirnfläche der Welle 1

## Patentansprüche

1. Kupplungsanordnung, insbesondere eines Getriebemotors,
wobei die Kupplungsanordnung eine Welle (1), an welcher eine Feder (5) ausgeformt ist, aufweist sowie eine Hülse (2), an welcher eine Nut (4) ausgeformt ist, in welche die Feder zumindest teilweise hineinragt,
wobei die Welle und die Hülse um eine Drehachse drehbar angeordnet sind,
wobei die Hülse koaxial zur Welle angeordnet ist,
wobei die Nut und die Feder sich jeweils in radialer Richtung erstrecken,
wobei die Feder zumindest teilweise mit einer Beschichtung versehen ist,
wobei die radiale Richtung auf die Drehachse der Welle bezogen ist,
**dadurch gekennzeichnet, dass** (9)
**an der Welle eine ebene axiale Stirnfläche** (6) **ausgebildet ist, an welcher die Feder angrenzt,**
**wobei die Normalenrichtung der axialen Stirnfläche parallel zur Drehachse der Welle ausgerichtet ist,**
**wobei die axiale Stirnfläche, ebenfalls, mit der Beschichtung versehen ist,**
**eine axial gerichtete Bohrung** (6)
**in die Feder eingebracht ist, die koaxial zur Welle und/oder zur Drehachse der Welle ausgerichtet ist.**

2. Kupplungsanordnung nach Anspruch 1,
**dadurch gekennzeichnet, dass** die Welle (1) mit der Hülse (2) drehfest verbunden ist, insbesondere wobei die Welle mittels der Feder mit der Hülse mittels der Nut (4) in Umfangsrichtung formschlüssig verbunden ist.

3. Kupplungsanordnung nach einem der vorangegangenen Ansprüche,
**dadurch gekennzeichnet, dass** die Feder (5) an der der Hülse zugewandten Stirnseite der Welle angeordnet ist, wobei die Nut (4) an der der Welle zugewandten Stirnseite der Hülse angeordnet ist.

4. Kupplungsanordnung nach einem der vorangegangenen Ansprüche,
**dadurch gekennzeichnet, dass**
die Beschichtung ein Gummi ist, insbesondere eine durch Eintauchen der Feder (5) in Flüssiggummi aufgebrachte Beschichtung ist,
und/oder dass
die Beschichtung ein Silikon oder ein Silikon-haltiges Material ist,
und/oder dass
die Beschichtung ein Kunststoff ist.

5. Kupplungsanordnung nach einem der vorangegangenen Ansprüche,
**dadurch gekennzeichnet, dass**
die Hülse (2) die axiale Stirnfläche berührt.

6. Kupplungsanordnung nach einem der vorangegangenen Ansprüche,
**dadurch gekennzeichnet, dass**
die Hülse in einer Bohrung (6) einer Rotorwelle aufgenommen ist und/oder drehfest mit der Rotorwelle verbunden ist.

7. Kupplungsanordnung nach einem der vorangegangenen Ansprüche,
**dadurch gekennzeichnet, dass**
die Hülse (2) aus Stahl gefertigt ist und/oder dass die Welle (1) aus Stahl gefertigt ist.

8. Kupplungsanordnung nach einem der vorangegangenen Ansprüche,
**dadurch gekennzeichnet, dass**
die Welle (1) eine Verzahnung aufweist.

9. Kupplungsanordnung **nach Anspruch 8,**
**dadurch gekennzeichnet, dass**
axial zwischen der Verzahnung und der Feder (9) an der Welle ein Lagersitz ausgebildet ist.

10. Kupplungsanordnung nach einem der vorangegangenen Ansprüche,
**dadurch gekennzeichnet, dass**
die Hülse (2) eine durch die Hülse durchgehende Axialbohrung (3) aufweist.

11. Kupplungsanordnung nach einem der vorangegangenen Ansprüche,
**dadurch gekennzeichnet, dass**
die Nutwände der Nut (4) an den beschichteten Seitenwänden der Feder anliegen

12. Kupplungsanordnung nach einem der vorangegangenen Ansprüche,
**dadurch gekennzeichnet, dass**
die durch die Hülse axial durchgehende Axialbohrung (3) zur axial gerichteten Bohrung (6) der Feder, insbesondere der Welle, koaxial ausgerichtet ist
und/oder dass
die durch die Hülse (2) axial durchgehende Axialbohrung in die axial gerichtete Bohrung der Feder, insbesondere der Welle, mündet.

13. Getriebemotor mit Kupplungsanordnung nach einem der vorangegangenen Ansprüche, **dadurch gekennzeichnet, dass**
der Getriebemotor einen Elektromotor aufweist,
wobei der Elektromotor eine drehbar gelagerte Rotorwelle aufweist,
wobei die Hülse (2) in eine in die Rotorwelle eingebrachte, axial gerichtete Bohrung der Rotorwelle eingesteckt ist.

## Claims

1. Coupling assembly, in particular for a gear motor,
wherein the coupling assembly comprises a shaft (1), on which a tongue (5) is formed, and a sleeve (2), on which a groove (4) is formed, into which groove the tongue at least partially protrudes,
wherein the shaft and the sleeve are arranged so as to be rotatable about an axis of rotation,
wherein the sleeve is arranged coaxially to the shaft,
wherein the groove and the tongue each extend in a radial direction,
wherein the tongue is at least partially provided with a coating, wherein the radial direction is specified in relation to the axis of rotation of the shaft,
**characterized in that**
a flat axial end face (9) is formed on the shaft, said end face being adjoined by the tongue (6),
wherein the normal direction of the axial end face is oriented parallel to the axis of rotation of the shaft,
wherein the axial end face is also provided with the coating, an axial bore (6) is formed in the tongue, said bore being oriented coaxially to the shaft and/or to the axis of rotation of the shaft.

2. Coupling assembly according to claim 1,
**characterized in that**
the shaft (1) is connected to the sleeve (2) for conjoint rotation,
in particular wherein the shaft, by means of the tongue, is connected to the sleeve, by means of the groove (4), in a form-fitting manner in the circumferential direction.

3. Coupling assembly according to any one of the preceding claims,
**characterized in that**
the tongue (5) is arranged on the end face of the shaft that faces toward the sleeve,
wherein the groove (4) is arranged on the end face of the sleeve that faces toward the shaft.

4. Coupling assembly according to any one of the preceding claims,
**characterized in that**
the coating is a rubber, in particular a coating applied by dipping the tongue (5) into liquid rubber,
and/or **in that**
the coating is a silicone or a silicone-containing material, and/or **in that**
the coating is a plastics material.

5. Coupling assembly according to any one of the preceding claims,
**characterized in that**
the sleeve (2) comes into contact with the axial end face.

6. Coupling assembly according to any one of the preceding claims,
**characterized in that**
the sleeve is received in a bore (6) of a rotor shaft and/or is connected to the rotor shaft for conjoint rotation.

7. Coupling assembly according to any one of the preceding claims,
**characterized in that**
the sleeve (2) is made of steel, and/or **in that** the shaft (1) is made of steel.

8. Coupling assembly according to any one of the preceding claims,
**characterized in that**
the shaft (1) has a toothing.

9. Coupling assembly according to claim 8,
**characterized in that**
a bearing seat is formed on the shaft axially between the toothing and the tongue (9).

10. Coupling assembly according to any one of the preceding claims,
**characterized in that**
the sleeve (2) has an axial bore (3) extending through the sleeve.

11. Coupling assembly according to any one of the preceding claims,
**characterized in that**
the groove walls of the groove (4) bear against the coated side walls of the tongue.

12. Coupling assembly according to any one of the preceding claims,
**characterized in that**
the axial bore (3) extending axially through the sleeve is oriented coaxially to the axial bore (6) of the tongue, in particular of the shaft,
and/or **in that**
the axial bore extending axially through the sleeve (2) opens into the axial bore of the tongue, in particular of the shaft.

13. Gear motor comprising a coupling assembly according to any one of the preceding claims,
**characterized in that**
the gear motor comprises an electric motor,
wherein the electric motor comprises a rotatably mounted rotor shaft,
wherein the sleeve (2) is inserted into an axial bore of the rotor shaft, which is formed in the rotor shaft.

## Revendications

1. Dispositif d'accouplement, en particulier d'un motoréducteur,
le dispositif d'accouplement présentant un arbre (1), au niveau duquel est formé un ressort (5), et une douille (2), au niveau de laquelle est formée une rainure (4) dans laquelle le ressort fait saillie au moins partiellement,
l'arbre et la douille étant agencés de manière à pouvoir tourner autour d'un axe de rotation,
la douille étant agencée coaxialement par rapport à l'arbre,
la rainure et le ressort s'étendant respectivement dans la direction radiale,
le ressort étant au moins partiellement muni d'un revêtement,
la direction radiale étant définie par rapport à l'axe de rotation de l'arbre,
**caractérisé en ce que**
une surface frontale (9) axiale plane que jouxte le ressort (6) est formée au niveau de l'arbre,
la direction de normale de la surface frontale axiale étant orientée parallèlement à l'axe de rotation de l'arbre,
la surface frontale axiale étant également munie du revêtement,
un alésage (6) orienté axialement est ménagé dans le ressort, lequel est orienté coaxialement par rapport à l'arbre et/ou par rapport à l'axe de rotation de l'arbre.

2. Dispositif d'accouplement selon la revendication 1,
**caractérisé en ce que**
l'arbre (1) est relié de manière solidaire en rotation à la douille (2),
l'arbre étant en particulier relié à la douille par le ressort avec blocage par complémentarité de forme dans la direction circonférentielle au moyen de la rainure (4).

3. Dispositif d'accouplement selon l'une quelconque des revendications précédentes, **caractérisé en ce que**
le ressort (5) est agencé au niveau de la surface frontale de l'arbre qui est tournée vers la douille,
la rainure (4) étant agencée au niveau de la surface frontale de la douille qui est tournée vers l'arbre.

4. Dispositif d'accouplement selon l'une quelconque des revendications précédentes, **caractérisé en ce que**
le revêtement est un caoutchouc, en particulier un revêtement appliqué par immersion du ressort (5) dans du caoutchouc liquide,
et/ou **en ce que**
le revêtement est un silicone ou un matériau contenant du silicone,
et/ou **en ce que**
le revêtement est une matière plastique.

5. Dispositif d'accouplement selon l'une quelconque des revendications précédentes, **caractérisé en ce que**
la douille (2) est en contact avec la surface frontale axiale.

6. Dispositif d'accouplement selon l'une quelconque des revendications précédentes, **caractérisé en ce que**
la douille est accueillie dans un alésage (6) d'un arbre de rotor et/ou est reliée de manière solidaire en rotation à l'arbre de rotor.

7. Dispositif d'accouplement selon l'une quelconque des revendications précédentes, **caractérisé en ce que**
la douille (2) est réalisée en acier et/ou **en ce que** l'arbre (1) est réalisé en acier.

8. Dispositif d'accouplement selon l'une quelconque des revendications précédentes, **caractérisé en ce que**
l'arbre (1) présente une denture.

9. Dispositif d'accouplement selon la revendication 8,
**caractérisé en ce que**
un siège de palier est formé au niveau de l'arbre de manière axiale entre la denture et le ressort (9).

10. Dispositif d'accouplement selon l'une quelconque des revendications précédentes, **caractérisé en ce que**
la douille (2) présente un alésage axial (3) traversant la douille.

11. Dispositif d'accouplement selon l'une quelconque des revendications précédentes, **caractérisé en ce que**
les parois de rainure de la rainure (4) s'appliquent contre les parois latérales revêtues du ressort.

12. Dispositif d'accouplement selon l'une quelconque des revendications précédentes, **caractérisé en ce que**
l'alésage axial (3) traversant axialement la douille est aligné coaxialement par rapport à l'alésage (6) orienté axialement du ressort, en particulier de l'arbre et/ou **en ce que**
l'alésage axial traversant axialement la douille (2) débouche dans l'alésage orienté axialement du ressort, en particulier de l'arbre.

13. Moto-réducteur comprenant un dispositif d'accouplement selon l'une quelconque des revendications précédentes,
**caractérisé en ce que**
le motoréducteur présente un moteur électrique,
le moteur électrique présentant un arbre de rotor monté rotatif,
la douille (2) étant enfichée dans un alésage, orienté axialement et ménagé dans l'arbre de rotor, de l'arbre de rotor.
